# EUROPEAN PATENT APPLICATION

(11) **EP 3 107 241 A1**
(43) Date of publication of application: **21.12.2016**
(21) Application number: 14881551.7
(22) Date of filing: 18.08.2014
(51) Int. Cl.: H04L 12/24

(54) **OPTICAL NETWORK SYSTEM AND MANAGEMENT METHOD**

(30) Priority: 10.02.2014 CN 201410046940
(71) Applicant: ZTE Corporation, Shenzhen, Guangdong 518057 (CN)
(72) Inventor: HUANG, Linfeng, Shenzhen Guangdong 518057 (CN); AI, Maofang, Shenzhen Guangdong 518057 (CN); YIN, Ying, Shenzhen Guangdong 518057 (CN)
(74) Representative: Deambrogi, Edgardo
(86) International application number: PCT/CN2014/084672
(87) International publication number: WO 2015/117296

(57) **Abstract**

An optical network system and a management method are provided. The system includes an Optical Line Terminal (OLT), a terminal and an Auto-Configuration Server (ACS). The ACS is configured to manage the OLT as well as the terminal connected under the OLT. The problems of existence of numerous network element layers and high management complexity of an optical network system are solved, the optical network management cost is reduced, and the operation convenience is improved.

## Description

### Technical Field

The present disclosure relates to the field of communications, and in particular to an optical network system and a management method.

### Background

At present, domestic telecom operators mainly popularize an access system for accessing a Passive Optical Network (PON) through optical fibre, and the access system has been deployed to home subscribers in some regions on a large scale. An access network PON is mainly composed of: a system device, e.g., an Optical Line Terminal (OLT); an optical fibre line, e.g., an Optical Distribution Network (ODN); and a PON terminal, e.g., an Optical Network Unit (ONU).

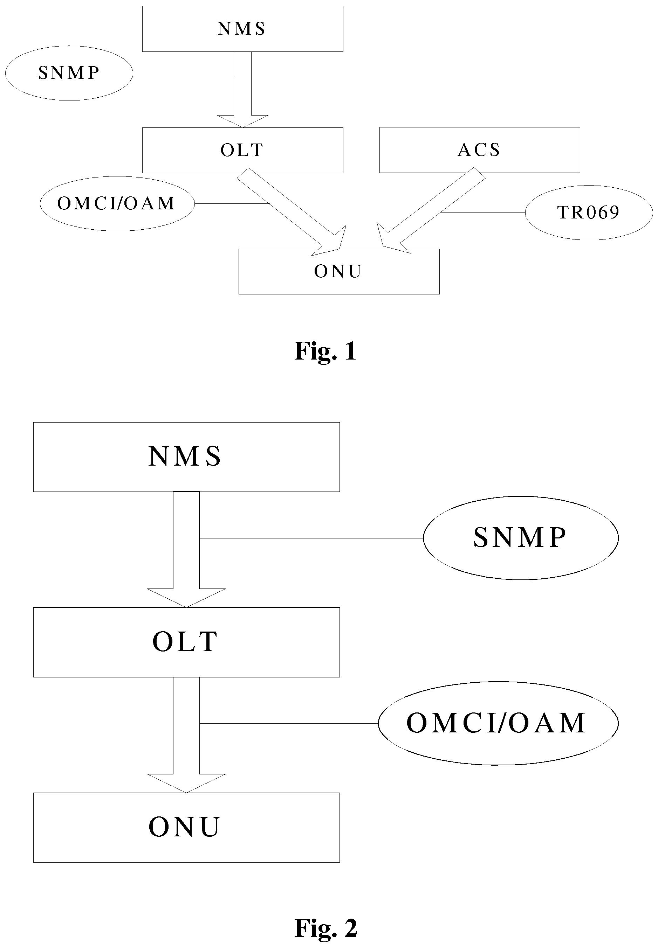

In the relevant art, the PON terminal is remotely managed in two modes, one being a mixed management mode. Fig. 1 is a structural diagram of a mixed management framework in the relevant art. As shown in Fig. 1, the mixed management framework includes: a Net Management System (NMS), an Auto-Configuration Server (ACS), an OLT and an ONU. The system is introduced below in detail.

According to the mixed management mode, a network manager directly configures and manages home gateway attributes of the PON terminal via a TR069 protocol, and a physical layer, link layer and non-home gateway attribute ONT Management and Control Interface (OMCI) domain of the PON terminal are managed via an OLT.

Remote OLT management is generally conducted by an OLT network management system via a Simple Network Management Protocol (SNMP). The mixed management mode of the PON terminal adds a management mode based on a CPE WAN Management Protocol (CWMP, also referred to as TR069 protocol) on the basis of a management framework of a PON terminal management and control interface (the GPON interface is OMCI), deploys the ACS in the network, and remotely configures and manages the home gateway attributes of the PON terminal via the TR069 protocol. The OLT manages the physical layer, link layer and non-home gateway attribute OMCI domain of the PON terminal.

By means of the method, subscriber services of the PON terminal are directly configured by an ACS network manager. The service configuration is comprehensive, and a control mode is flexible. However, both an ACS management system and an OLT management system are needed, thereby increasing the network management cost and the complexity.

Fig. 2 is a structural diagram of a single management framework in the relevant art. As shown in Fig. 2, the single management framework includes: an NMS, an OLT and an ONU, and the system is introduced below.

In a single management mode, parameters are managed by the OLT. The OLT manages all parameter configurations via a PON terminal device management and control interface (the GPON interface is OMCI), and finally, a PON terminal and an OLT device can be managed in an identical network manager, namely an SNMP network manager of the OLT.

By means of the method, all configurations of the OLT and the PON terminal can be managed in an identical network management interface. However, service configuration parameters of the PON terminal are not as rich and flexible as those supported by a TR069 network manager, and under an SNMP network management mode, it is required that the network manager issues an SNMP message to the OLT and then the OLT issues an OMCI message to the PON terminal, that is, the PON terminal is subjected to indirect management, numerous network element layers are involved in the management, and the operation is inconvenient.

An effective solution has not yet been proposed at present for the problems, in the relevant art, of existence of numerous network element layers and high management complexity of an optical network system.

### Summary

The embodiments of the present disclosure provide an optical network system and a management method, which are intended to solve the problems, in the relevant art, of existence of numerous network element layers and high management complexity of a network system.

According to one aspect of the embodiments of the present disclosure, an optical network system is provided, which may include: an OLT, a terminal and an ACS. The ACS may be configured to manage the OLT as well as the terminal connected under the OLT.

In an exemplary embodiment, the OLT may include a management module, wherein the management module may be configured to manage home gateway attributes of the terminal and manage link and physical layers and non-home gateway attributes of the terminal connected under the OLT; and the ACS may manage, through the management module, the OLT as well as the terminal connected under the OLT.

In an exemplary embodiment, the system may further include: an external device, communicating with the OLT, and configured to manage home gateway attributes of the terminal and manage link and physical layers and non-home gateway attributes of the terminal connected under the OLT. The ACS may manage, through the external device, the OLT as well as the terminal connected under the OLT.

In an exemplary embodiment, by means of a data model, the management module or the external device may manage the home gateway attributes of the terminal and manage the link and physical layers and non-home gateway attributes of the terminal connected under the OLT, wherein the data model may include at least one of the following parameters: device information of the OLT, management configuration information, and information of the terminal connected under the OLT.

In an exemplary embodiment, the management module or the external device may query and/or configure the parameters in corresponding table entries of a database of the OLT, and the management module or the external device may initiate a query request to the terminal, and send the parameters returned by the terminal to the ACS.

In an exemplary embodiment, the management module or the external device may initiate a query request to the terminal, and send the parameters returned by the terminal to the ACS; and/or, the management module or the external device may initiate a configuration request to the terminal to configure the terminal, and return a configuration result to the ACS.

In an exemplary embodiment, the data model may be a data model adopted in a TR069 protocol.

In an exemplary embodiment, the device information of the OLT may include at least one of: a manufacturer, a model, a software version and a hardware version; and/or, the management configuration information may include at least one of: uplink information configuration information, route configuration information, service module configuration information and fan configuration information; and/or, the information of the terminal connected under the OLT may include at least one of: a register serial number, terminal status information and PON terminal configuration information.

In an exemplary embodiment, the ACS may be configured to manage device information of the OLT as well as device information of the terminal connected under the OLT.

In an exemplary embodiment, the OLT may be further configured to be connected to the ACS via a pre-configured parameter value, wherein the parameter value may include: a connection address of the ACS and/or an authentication parameter.

According to another aspect of the embodiments of the present disclosure, a management method for an optical network system is also provided, which may be applied to the optical network system including: an OLT, a terminal and an ACS. The method may include that: the ACS manages the OLT as well as the terminal connected under the OLT.

By means of the embodiments of the present disclosure, the optical network system is provided, which includes: the OLT, the terminal and the ACS, and the ACS is configured to manage the OLT as well as the terminal connected under the OLT. The problems of existence of numerous network element layers and high management complexity of an optical network system are solved, the optical network management cost is reduced, and the operation convenience is improved.

### Brief Description of the Drawings

The drawings illustrated herein are intended to provide further understanding of the present disclosure, and constitute a part of the present disclosure. The schematic embodiments and illustrations of the present disclosure are intended to explain the present disclosure, and do not form improper limits to the present disclosure. In the drawings:
Fig. 1 is a structural diagram of a mixed management framework in the relevant art;
Fig. 2 is a structural diagram of a single management framework in the relevant art;
Fig. 3 is a structure block diagram of an optical network system according to an embodiment of the present disclosure;
Fig. 4 is a structure block diagram 1 of an exemplary optical network system according to an embodiment of the present disclosure;
Fig. 5 is a structure block diagram 2 of an exemplary optical network system according to an embodiment of the present disclosure;
Fig. 6 is a structural diagram illustrating transfer of a part of SNMP network management functions of an OLT to an ACS according to an exemplary embodiment of the present disclosure;
Fig. 7 is a structural diagram 1 illustrating transfer of all SNMP network management functions of an OLT to an ACS according to an exemplary embodiment of the present disclosure;
Fig. 8 is a structural diagram 2 illustrating transfer of all SNMP network management functions of an OLT to an ACS according to an exemplary embodiment of the present disclosure;
Fig. 9 is a diagram illustrating a parameter Internet Gateway Device (IGD), IGD device information and subordinate parameters thereof according to an exemplary embodiment of the present disclosure;
Fig. 10 is a diagram illustrating management configurations of an OLT in an OLT data model and a part of parameter formats of a subordinate PON terminal according to an exemplary embodiment of the present disclosure; and
Fig. 11 is a diagram illustrating signalling interaction between an ACS and a TR069 function module of an OLT according to an exemplary embodiment of the present disclosure.

### Detailed Description of the Embodiments

It is important to note that the embodiments of the present disclosure and the characteristics in the embodiments can be combined under the condition of no conflicts. The present disclosure will be illustrated below with reference to the drawings and the embodiments in detail.

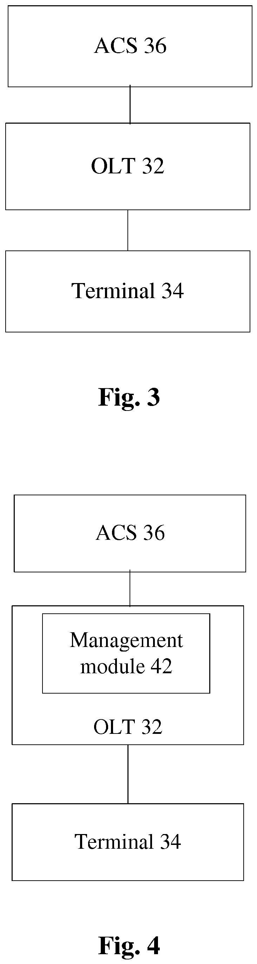

The present embodiment provides an optical network system. Fig. 3 is a structure block diagram of an optical network system according to the embodiment of the present disclosure. As shown in Fig. 3, the optical network system includes: an OLT 32, a terminal 34 and an ACS 36. The system is illustrated below.

The ACS 36 is configured to manage the OLT 32 as well as the terminal 34 connected under the OLT 32.

By configuring the ACS 36 to manage the OLT 32, the ACS 36 can implement management on the terminal 34 as well as the OLT 32, thereby solving the problems of existence of numerous network element layers and high management complexity of an optical network system, reducing the optical network management cost, and improving the operation convenience.

In the embodiments of the present disclosure, the ACS 36 can implement management on the terminal 34 as well as the OLT 32 through two exemplary implementation modes, and the two exemplary implementation modes will be illustrated below.

Fig. 4 is a structure block diagram 1 of an exemplary optical network system according to an embodiment of the present disclosure. As shown in Fig. 4, the OLT 32 includes a management module 42, and the system is illustrated below.

The management module 42 is configured to manage home gateway attributes of the terminal 34 and manage link and physical layers and non-home gateway attributes of the terminal 34 connected under the OLT 32; and the ACS 36 manages, through the management module 42, the OLT 32 as well as the terminal 34 connected under the OLT 32.

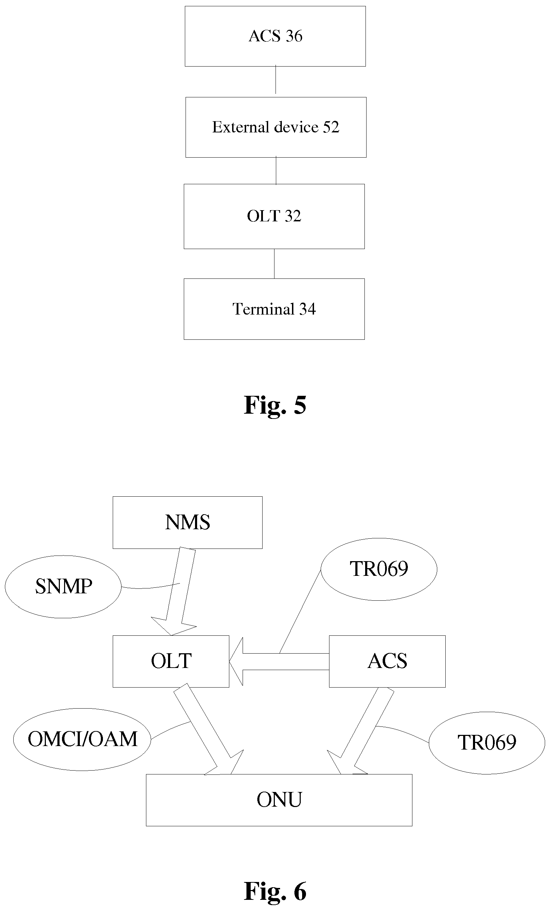

Fig. 5 is a structure block diagram 2 of an exemplary optical network system according to an embodiment of the present disclosure. As shown in Fig. 5, the OLT 32 includes an external device 52, and the system is illustrated below.

The external device 52 communicates with the OLT 32, and is configured to manage home gateway attributes of the terminal 34 and manage link and physical layers and non-home gateway attributes of the terminal 34 connected under the OLT 32. The ACS 36 manages, through the external device 52, the OLT 32 as well as the terminal 34 connected under the OLT 32.

In the present embodiment, by means of a data model, the management module 42 or the external device 52 can manage the home gateway attributes of the terminal 34 and manage the link and physical layers and non-home gateway attributes of the terminal 34 connected under the OLT 32, wherein the data model may include at least one of the following parameters: device information of the OLT, management configuration information 32, and information of the terminal 34 connected under the OLT 32. The data model may be a data model adopted in a TR069 protocol or a data model adopted in a non-TR069 protocol.

In the present embodiment, there may be multiple modes of querying and/or configuring parameters for the data model by the terminal 34. In an exemplary embodiment, the management module 42 or the external device 52 queries and/or configures the parameters in corresponding table entries of a database of the OLT 32, and the management module 42 or the external device 52 initiates a query request to the terminal, and sends the parameters returned by the terminal to the ACS 36.

In an exemplary embodiment, the management module 42 or the external device 52 initiates a query request to the terminal 34, and sends the parameters returned by the terminal 34 to the ACS 36; and/or, the management module 42 or the external device 52 initiates a configuration request to the terminal to configure the terminal, and return a configuration result to the ACS 36. In the embodiment, the management module 42 and the external device 52 may be implemented by software, hardware or the combination of software and hardware.

In the above embodiment, the device information of the OLT 32 may include at least one of: a manufacturer, a model, a software version and a hardware version; the management configuration information may include at least one of: uplink information configuration information, route configuration information, service module configuration information and fan configuration information; and the information of the terminal 34 connected under the OLT 32 may include at least one of: a register serial number, terminal status information and PON terminal configuration information.

In the present embodiment, the ACS 36 may entirely manage the OLT 32 and the terminal 34 connected under the OLT 32, or may partially manage the OLT 32 and the terminal 34 connected under the OLT 32. For example, the ACS 36 is configured to manage device information of the OLT 32 as well as device information of the terminal 34 connected under the OLT 32.

The embodiment of the present disclosure also provides a management method for an optical network system, which is applied to the optical network system including: an OLT 32, a terminal 34 and an ACS 36. The method includes that: the ACS 36 manages the OLT 32 as well as the terminal 34 connected under the OLT 32. Functions and effects of the OLT 32, the terminal 34 and the ACS 36 are identical to those of the above embodiment, which will not be elaborated herein.

According to the method, by configuring the ACS 36 to manage the OLT 32, the ACS 36 can manage the terminal 34 as well as the OLT 32 in a unified manner, thereby making it unnecessary for the ACS and the OLT to manage the terminal respectively; or, making it unnecessary for the ACS to manage the OLT which further manages the terminal, thereby solving the problems of existence of numerous network element layers and high management complexity of an optical network system, reducing the optical network management cost, and improving the operation convenience.

In order to make the technical solutions of the embodiments of the present disclosure and the implementation methods thereof clearer, an implementation process thereof will be described below with reference to an exemplary embodiment in detail.

The exemplary embodiment improves a management method for an OLT and a PON terminal in a PON system in the relevant art, and transfers a part of or all of original SNMP network management functions of the PON terminal and the OLT to an ACS, thereby making it possible for an identical network manager to query and manage information of the PON terminal and the OLT, facilitating fault discovery and location after large-scale deployment of PON terminals, and improving the management efficiency.

A TR069 function module is added to the interior of the OLT or to a relevant external device of the OLT, so that the OLT supports a TR069 management mode to enable the OLT and an OMCI management domain of the link and physical layers and non-home gateway attributes of the subordinate PON terminal to be managed by the ACS.

The addition of the TR069 function module to the interior of the OLT or to the relevant external device of the OLT may be implemented by software, hardware or the combination of software and hardware.

Fig. 6 is a structural diagram illustrating transfer of a part of SNMP network management functions of an OLT to an ACS according to an exemplary embodiment of the present disclosure. As shown in Fig. 6, the OLT transfers a part of SNMP network management functions to the ACS, so that the OMCI management domain of the link and physical layers and non-home gateway attributes of the subordinate PON terminal and a part of parameters of the OLT can be queried and managed by the ACS.

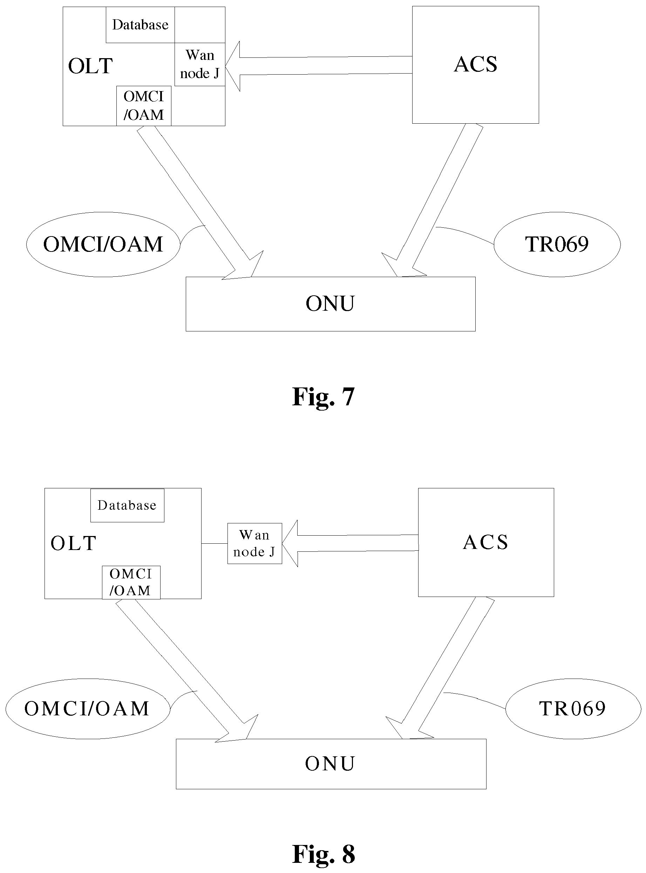

Fig. 7 is a structural diagram 1 illustrating transfer of all SNMP network management functions of an OLT to an ACS according to an exemplary embodiment of the present disclosure. As shown in Fig. 7, a function supporting TR069 management is added to the interior of an OLT device, the OLT transfers all SNMP network management functions to the ACS, and the ACS can query and configure the OLT and the PON terminal subordinate to the OLT.

Fig. 8 is a structural diagram 2 illustrating transfer of all SNMP network management functions of an OLT to an ACS according to an exemplary embodiment of the present disclosure. As shown in Fig. 8, the OLT adds a function supporting TR069 management via an external device, the OLT transfers all SNMP network management functions to the ACS, and the ACS can query and configure the OLT and the PON terminal subordinate to the OLT.

The exemplary embodiment also constructs a set of data models which is suitable for the OLT device and can be adopted in a TR069 protocol. Parameters contained in the data model may include, but are not limited to, device information of the OLT, management configurations, and information of the subordinate PON terminal, wherein
the device information of the OLT may include, but is not limited to, a manufacturer, model, software version and hardware version of the OLT;
the management configurations of the OLT may include, but are not limited to, uplink information configurations, route configurations, service module configurations, fan configurations and the like; and
the information of the subordinate PON terminal may include, but is not limited to, a register serial number of the terminal on the OLT, a current status of the terminal and a configuration bandwidth of the terminal.

In the exemplary embodiment, the TR069 function module is added to the interior of the OLT. The data model, with each parameter therein pointing to a corresponding table entry or a corresponding function entity of the database in the OLT, is used. A wan connection, which is bound with the TR069 function module, is created on the OLT to serve as a communication carrier of the TR069 function module and the ACS. The TR069 function module of the OLT is connected with the ACS. Information interaction, which may include: response to parameter query configuration of the device information of the OLT, the management configurations and the information of the subordinate PON terminal, or active reporting of the device information of the OLT, the management configurations and the information of the subordinate PON terminal from the OLT to the ACS, is performed between the TR069 function module of the OLT and the ACS.

The TR069 function module added in the exemplary embodiment may be implemented in the interior of the OLT or may be implemented on an external device. For example, the external device is in normal network communication with the OLT and can perform data interaction with the OLT. By taking a connected OLT as an object, the external device is enabled to support or additionally support the TR069 function module, and a TR069 data model of the OLT device is used.

Different from Fig. 7 and Fig. 8, a method for adding the TR069 function module in Fig. 6 refers to transferring merely a part of SNMP network management functions, not all of the functions, to the ACS. The management of the device information of the OLT, the information of the subordinate PON terminal and the like are transferred, and faulty terminal location can be achieved in an identical network manager. SNMP management for other parts such as device configurations is still conducted by an original SNMP network manager.

In the exemplary embodiment, by adding the TR069 function module in the interior or exterior of the OLT device, the OLT interacts with the ACS, so that a part or all pieces of information of the OLT and the subordinate PON terminal can be queried and managed by an identical ACS.

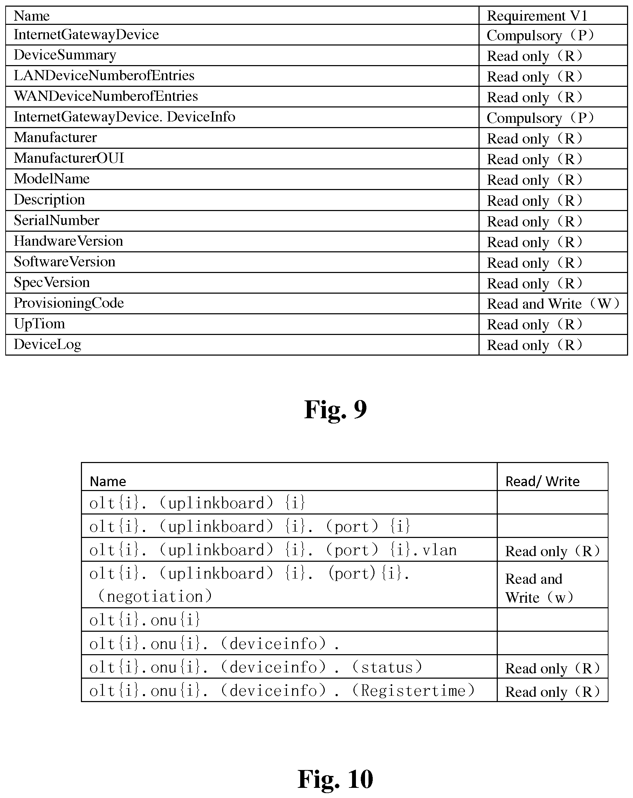

The exemplary embodiment also constructs or defines a set of data models (for example, a TR098 standard specifies a data model of an IGD) which is suitable for the OLT device and can be adopted in a TR069 protocol. Contained parameters may include, but are not limited to, device information of the OLT, management configurations, and information of the subordinate PON terminal. Fig. 9 is a diagram illustrating a parameter IGD in TR098, IGD device information and subordinate parameters thereof according to an exemplary embodiment of the present disclosure. Parameter levels of the data model are illustrated with reference to Fig. 9.
1. The data model may define the OLT device as a first-level parameter (for example, InternetGatewayDevice of a TR098 protocol).
2. The device information of the OLT may be defined as a second-level parameter (for example, InternetGatewayDevice.DeviceInfo. of the TR098 protocol) with reference to a TR098 specification, and the manufacturer, model, software version and hardware version of the OLT, included in the device information of the OLT, may be defined as third-level parameters (for example, the manufacturer is described in an InternetGatewayDevice.DeviceInfo.Manufacturer parameter of the TR098 protocol).
3. The management configurations (for example, an uplink board of the OLT, route information of the OLT, terminal service configurations of the OLT, fan configurations of the OLT and the like) of the OLT may be functionally divided into a plurality of second-level parameter definitions. For example, the uplink board is further divided into a third-level parameter 'uplink port x', and the uplink port x is further divided into four-level parameters 'uplink port vlan', 'uplink port negotiation' and the like. Fig. 10 is a diagram illustrating management configurations of an OLT in an OLT data model and a part of parameter formats of a subordinate PON terminal according to an exemplary embodiment of the present disclosure. As shown in Fig. 10, each four-level parameter may be defined as read only (R) or read and write (W) as required, a set parameter status is reflected by a parameter value, and {i} in Fig. 10 represents a serial number.
4. The information of the subordinate PON terminal may be divided into different second-level parameters according to different terminals, and the second-level parameters may be further divided into third-level parameters such as terminal device information and configuration information; a plurality of four-level parameters, such as a running status, model, register online time and logout time of a terminal device, are subordinate to the 'terminal device information' in the third-level parameters; a plurality of four-level parameters, such as an authentication mode of the terminal device and a configuration bandwidth of a terminal, are subordinate to the 'configuration information' in the third-level parameters, and the above four-level parameters may be defined as read only (R) or read and write (W) as required, and a set parameter status is reflected by a parameter value; and for example, Fig. 10 is a diagram illustrating management configurations of an OLT in an OLT data model and a part of parameter formats of a subordinate PON terminal according to an exemplary embodiment of the present disclosure, as shown in Fig. 10, {i} in Fig. 10 represents a serial number.

A key parameter for marking the different PON terminals may adopt any full-network unique mark value of the terminal, which may include, but is not limited to, a register serial number, a logical mark number, position numbers of PON MAC and PON terminals at board card ports of the OLT, and the like.

It is important to note that the exemplary embodiment is only a possible data model establishment method. There are many methods for establishing or defining a data model actually, besides the above method.

In the exemplary embodiment, a TR069 function module is added to the interior of the OLT. The data model, with each parameter in the data model pointing to a corresponding table entry or a corresponding function entity of the database in the OLT, is used. A wan connection J (any node) bound with the TR069 function module is created on the OLT to serve as a communication carrier of the TR069 function module and the ACS, and the wan node J is in a normal network, and can normally communicate with the ACS.

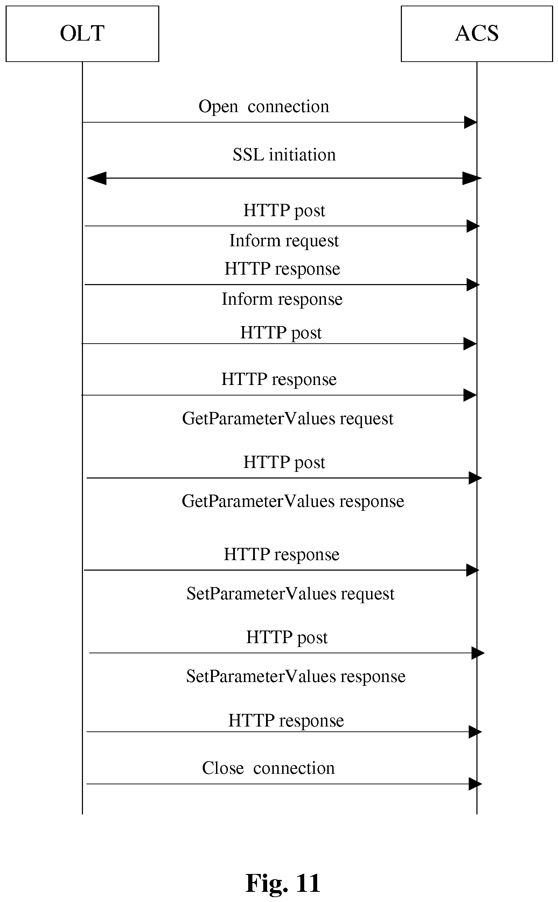

Fig. 11 is a diagram illustrating signalling interaction between an ACS and a TR069 function module of an OLT according to an exemplary embodiment of the present disclosure. As shown in Fig. 11, parameter values used for the connection with the ACS are configured for the OLT. The parameter value may include a connection Uniform Resource Locator (URL) of an ACS network server, a subscriber name and a password reported to the ACS by the OLT, a URL corresponding to a connection request, a connection request subscriber name, a connection request password, enabling of the connection request to be reported periodically, periodic report time, and selection whether to use a certificate. When it is necessary to perform authentication on a CA certificate, a storage space and folder position of the CA certificate are provided, the OLT completes authentication with the ACS according to setting of the subscriber name and the password, and connection is established, so that the OLT receives a parameter query command of the ACS. The ACS issues GetParameterValues to the OLT, and acquires a value of a parameter in a data model defined by the TR069 function module of the OLT. The OLT returns a current value of the parameter upon receiving the parameter query request.

The query may be divided into two types. In one type, a current value may be taken from the corresponding table entry of the database of the OLT as a parameter value. For example, the device information of the OLT is queried, and four parameters such as the manufacturer, model, software version and hardware version of the OLT device may be all directly acquired from a local database of the OLT.

In the other type, it is necessary for the OLT to initiate a parameter value acquisition action to a PON terminal or a single board, and after the terminal returns a result, a query value is sent to the ACS finally.

As shown in Fig. 11, the OLT receives a parameter configuration command of the ACS. The ACS issues SetParameterValues to the OLT, and configures a value of a parameter in a data model defined by the TR069 function module of the OLT. The OLT completes a corresponding action according to a configuration application command, and returns a result.

The configuration is divided into two types. In the first type, local data of the OLT such as route information is directly configured, so a local command is directly configured, and after parameter configuration is completed, a configuration result is returned to the ACS.

In the second type, it is necessary to be issued to a subordinate PON terminal, the OLT generates a corresponding OMCI command and issues the OMCI command to a designated PON terminal, and a configuration result is returned by the terminal and is sent to the ACS finally.

It is important to note that the present disclosure may expand other implementation modes. For example,
a PON terminal device may include, but is not limited to, PON devices such as a GPON, an EPON, an APON and a BPON.

The embodiments of the present disclosure may be performed using a TR069 protocol, or may be expanded for other terminal management protocols, which are not the TR069 protocol, and terminal devices. By implementing the terminal management protocols at local device sides of subscriber terminals, a part of or all of functions of terminals and system side devices of the terminals can be managed simultaneously by an identical ACS network manager.

The embodiments of the present disclosure are performed in a PON uplink mode, or may be expanded for terminal devices adopting other uplink modes. By implementing TR069 management at the local device sides of the subscriber terminals, the terminals and system side devices of the terminals can be managed simultaneously by an identical ACS network manager.

The terminal devices can adopt other uplink modes which may include, but are not limited to, an Ethernet uplink mode, a Digital Subscriber Line (xDSL) uplink mode, an Ethernet over Coax (EOC) uplink mode, a Power Line Carrier (PLC) uplink mode and the like.

An xDSL terminal is taken as an example. A management unit supporting the TR069 protocol is added to a local device namely a Digital Subscriber Line Access Multiplexer (DSLAM) of the xDSL terminal. In such a way, an ACS network manager may manage the DSLAM, and can query and manage physical layer parameters and link layer parameters of the xDSL terminal via the DSLAM.

Those skilled in the art shall understand that all or a part of steps in the method may be completed by instructing relevant hardware via a program. The program may be stored in a computer readable storage medium such as a read-only memory, a magnetic disk or an optical disc. Optionally, all or a part of steps in the embodiments may also be implemented using one or more integrated circuits. Accordingly, each module/unit in the embodiments may be implemented in a form of hardware, or may be implemented in a form of a software function module. The present disclosure is not limited to the combination of hardware and software in any specific form.

The above is only the exemplary embodiments of the present disclosure. Certainly, the present disclosure may also have other embodiments. Those skilled in the art may make various corresponding variations and modifications according to the present disclosure without departing from the essence of the present disclosure, but these corresponding variations and modifications shall fall within the protective scope of the appended claims of the present disclosure.

Obviously, those skilled in the art shall understand that all modules or all steps in the present disclosure may be implemented by using a general calculation apparatus, may be centralized on a single calculation apparatus or may be distributed on a network composed of a plurality of calculation apparatuses. Optionally, they may be implemented by using executable program codes of the calculation apparatuses. Thus, they may be stored in a storage apparatus and executed by the calculation apparatuses, the shown or described steps may be executed in a sequence different from this sequence under certain conditions, or they are manufactured into each integrated circuit module respectively, or a plurality of modules or steps therein are manufactured into a single integrated circuit module. Thus, the present disclosure is not limited to the combination of any specific hardware and software.

The above is only the exemplary embodiments of the present disclosure, and is not intended to limit the present disclosure. There may be various modifications and variations in the present disclosure for those skilled in the art. Any modifications, equivalent replacements, improvements and the like within the principle of the present disclosure shall fall within the protection scope of the present disclosure.

### Industrial Applicability

As above, the optical network system and the management method provided by the embodiments of the present disclosure have the beneficial effects as follows. A management method for an OLT and a PON terminal in a PON system in the relevant art is improved, and a part of or all of original SNMP network management functions of the PON terminal and the OLT are transferred to an ACS, thereby making it possible for an identical network manager to query and manage information of the PON terminal as well as the OLT, facilitating fault discovery and location after large-scale deployment of the PON terminal, improving the management efficiency, reducing the optical network management cost, and improving the operation convenience.

## Claims

1. An optical network system, comprising: an Optical Line Terminal (OLT), a terminal and an Auto-Configuration Server (ACS), wherein
the ACS is configured to manage the OLT as well as the terminal connected under the OLT.

2. The optical network system as claimed in claim 1, wherein
the OLT comprises a management module, wherein the management module is configured to manage home gateway attributes of the terminal and manage link and physical layers and non-home gateway attributes of the terminal connected under the OLT; and
the ACS manages, through the management module, the OLT as well as the terminal connected under the OLT.

3. The optical network system as claimed in claim 1, wherein
the optical network system further comprises: an external device, communicating with the OLT, and configured to manage home gateway attributes of the terminal and manage link and physical layers and non-home gateway attributes of the terminal connected under the OLT;
the ACS manages, through the external device, the OLT as well as the terminal connected under the OLT.

4. The optical network system as claimed in claim 2 or 3, wherein by means of a data model, the management module or the external device manages the home gateway attributes of the terminal and manages the link and physical layers and non-home gateway attributes of the terminal connected under the OLT, wherein the data model comprises at least one of the following parameters: device information of the OLT, management configuration information, and information of the terminal connected under the OLT.

5. The optical network system as claimed in claim 4, wherein the management module or the external device queries and/or configures the parameters in corresponding table entries of a database of the OLT; and
the management module or the external device initiates a query request to the terminal, and sends the parameters returned by the terminal to the ACS.

6. The optical network system as claimed in claim 4, wherein
the management module or the external device initiates a query request to the terminal, and sends the parameters returned by the terminal to the ACS; and/or,
the management module or the external device initiates a configuration request to the terminal to configure the terminal, and returns a configuration result to the ACS.

7. The optical network system as claimed in claim 4, wherein the data model is a data model adopted in a TR069 protocol.

8. The optical network system as claimed in claim 4, wherein
the device information of the OLT comprises at least one of: a manufacturer, a model, a software version and a hardware version; and/or,
the management configuration information comprises at least one of: uplink information configuration information, route configuration information, service module configuration information and fan configuration information; and/or,
the information of the terminal connected under the OLT comprises at least one of: a register serial number, terminal status information and Passive Optical Network (PON) terminal configuration information.

9. The optical network system as claimed in any one of claims 1 to 8, wherein the ACS is configured to manage device information of the OLT as well as device information of the terminal connected under the OLT.

10. The optical network system as claimed in any one of claims 1 to 8, wherein the OLT is further configured to be connected to the ACS via a pre-configured parameter value, wherein the parameter value comprises: a connection address of the ACS and/or an authentication parameter.

11. A management method for an optical network system, applied to the optical network system as claimed in any one of claims 1 to 10, the optical network system comprising: an Optical Line Terminal (OLT), a terminal and an Auto-Configuration Server (ACS), the method comprising:
by means of the ACS, managing the OLT as well as the terminal connected under the OLT.
